# EUROPEAN PATENT SPECIFICATION

(11) **EP 1 781 753 B1**
(45) Date of publication and mention of the grant of the patent: **01.10.2008**
(21) Application number: 05774931.9
(22) Date of filing: 22.08.2005
(51) Int. Cl.: C09K 5/16, F24J 1/00, F01N 3/20, F02N 17/02

(54) **HEAT GENERATING SYSTEM AND METHOD**
WÄRMEERZEUGUNGSSYSTEM UND -VERFAHREN
SYSTEME ET METHODE DE GENERATION DE CHALEUR

(30) Priority: 23.08.2004 JP 2004242622
(43) Date of publication of application: 09.05.2007
(73) Proprietor: TOYOTA JIDOSHA KABUSHIKI KAISHA, Toyota-shi, Aichi-ken, 471-8571 (JP)
(72) Inventor: TSUJI, Kimitoshi, Toyota-shi, Aichi 4718571 (JP); KUNO, Oji, Toyota-shi, Aichi 4718571 (JP); YAMATO, Masanori, Toyota-shi, Aichi 4718571 (JP); HIRATA, Hirohito, Toyota-shi, Aichi 4718571 (JP)
(74) Representative: Kuhnen & Wacker
(86) International application number: PCT/JP2005/015591
(87) International publication number: WO 2006/022397

(56) References cited:
- US-A- 3 677 204
- US-A- 5 499 501
- US-A- 5 827 496
- PATENT ABSTRACTS OF JAPAN vol. 1995, no. 10, 30 November 1995 (1995-11-30) & JP 07 180539 A (MITSUBISHI ELECTRIC CORP), 18 July 1995 (1995-07-18) cited in the application

## Description

### Technical Field

The present invention relates to a repeatedly usable heat generating system and method.

### Related Art

Chemical heat generating systems, known in the prior art, utilize the reaction heat generated by the reaction between water and alkaline earth metal oxides such as MgO, CaO, SrO and BaO. Such systems have been applied to one-time heating of food products including sake, box lunches and the like.

The reaction between water and alkaline earth metal oxides produces hydroxides, but the hydroxides can be decomposed by heating, thereby releasing water and regenerating them to the original oxides. The decomposition temperatures of the hydroxides Mg(OH)₂, Ca(OH)₂, Sr(OH)₂ and Ba(OH)₂ are approximately 260°C, 480°C, 580°C and 730°C, respectively.

The use of heat generated by the reaction between water and alkaline earth metal oxides for warmers in automobiles and the like has been proposed. For example, Japanese Unexamined Patent Publication No. 7-180539 proposes a heat generating system utilizing the reaction between water and alkaline earth metal oxides in a closed system, in order to stably conduct an exothermic reaction repeatedly and over a prolonged period. This heat generating system permits rapid heating of a catalyst, cooling water members, air intake members and the like for internal combustion engines such as automobile engines. Japanese Unexamined Patent Publication No. 7-180539 is concerned with a technical problem previously known in the prior art the problem is that the hydroxides produced by reaction between water and oxides react with carbon dioxide gas in the air to produce carbonates which have a high decomposition temperature and do not easily permit removal of water, whereby the amount of the alkaline earth metal oxide reactants is reduced.

Japanese Unexamined Patent Publication No. 2002-209311 discloses a system utilizing a heat generating member which generates heat by a pure iron oxidizing effect, as a heat generating system for warming up and heating electrical devices mounted in automobiles. Also, Japanese Unexamined Patent Publication No. 2002-339747 discloses using an electrical heater for heating an engine coolant stored in a tank.

In addition to these heat generating systems, there are also known physical heat generating systems which cause adsorption of a gas or the like onto a porous material and utilize the heat of adsorption. Such physical heat generating systems are associated with various problems, including the difficulty of improving desorption during regeneration, the need for a tank for the gas to be adsorbed, the need to replenish the reaction gas because it decreases with passing time, and the need for a large volume of adsorption gas.

US 5,827,496 discloses methods and systems for transferring heat in a combustion system. It is disclosed that the methods and systems provide for alternately exposing a reducing gas and a gas containing molecular oxygen to an unmixed combustion catalyst to respectively reduce and oxidize the unmixed combustion catalyst.

US 3,677,204 relates to a method and apparatus for generating high temperature heat. It is disclosed that single or multiple beds of cobalt oxide operating in series and/or parallel between two basic cycles of oxidizing and reducing of the metal oxide with air and fuel, respectively, discharges stack gas and heat alternately, thereby liberating very high temperature gases for various heating applications.

### Disclosure of Invention

The present invention provides a heat generating system and method which have not been proposed in the prior art.

The heat generating system of the invention comprises a heat generating part comprising a heat generating material which generates heat when oxidized, wherein the heat generating system further comprises an oxidizing gas source which supplies an oxidizing gas to the heat generating part, and a reducing gas source which supplies a reducing gas to the heat generating part, wherein the oxidizing gas supplied from the oxidizing gas source causes the heat generating material to be oxidized and generate heat, and the reducing gas supplied from the reducing gas source reductively regenerates the heat generating material which has been oxidized.

According to the heat generating system of the invention, a heat generating material can be repeatedly oxidized to generate heat and repeatedly reduced to be regenerated.

The heat generating system of the invention further comprises a heat source which supplies heat to the heat generating part, wherein the heat source supplies heat to the heat generating part while the reducing gas source supplies a reducing gas to the heat generating part.

It is accordingly possible to accelerate reduction of the heat generating material. This is because materials whose oxidizing reaction is an exothermic reaction have endothermic reduction reactions.

In one mode of the heat generating system of the invention, the heat source is an internal combustion engine.

This mode allows recovery and storage of waste heat energy, from an internal combustion engine, at a high energy density.

In yet another mode of the heat generating system of the invention, the heat generating material is in the form of powder or particles of a metal or a metal compound.

According to the invention, the heat generating material is combined with a powder or particles of another inert material.

According to this mode, it is possible to prevent aggregation of the heat generating material during the oxidative heat generation and reductive regeneration cycle.

The heat generating material is iron chloride, the inactive material is alumina, and the iron chloride and alumina may be combined with sodium chloride.

This will allow a high degree of dispersion of the heat generating material, while the chloride ion, as the counter ion to iron, functions as an oxidizing agent, thereby accelerating the exothermic reaction.

In yet another mode of the heat generating system of the invention, the heat generating system further comprises a heating medium for heat exchange with the outside of the system, the heat generating part comprises first and second channels which allow mutual heat exchange, the heat generating material is situated in the first channel where the oxidizing gas and the reducing gas flow through, and the heating medium flows through the second channel.

This mode can accelerate heat exchange between the heat generating system of the invention and the outside of the system.

In this mode, the first channel may be the cell channel of a metal honeycomb body and the second channel may be the channel in the walls of the metal honeycomb body. Alternatively, both the first and second channels may be cell channels of the metal honeycomb body, with the first and second channels situated in an alternate manner. The oxidizing gas and reducing gas may flow either in opposite directions or in the same direction with heating medium in the first and second channels, respectively. The oxidizing gas and reducing gas preferably circulate in opposite directions with heating medium in order to promote heat exchange.

In the heat generating system of the invention, the heat generating material may be selected from the group consisting of transition metals and compounds thereof, preferably from the group consisting of iron, cobalt, nickel and copper, and compounds thereof, more preferably from the group consisting of iron and its compounds.

The heat generating method of the invention comprises supplying an oxidizing gas to a heat generating material which generates heat when oxidized according to claim 5.

According to the heat generating method of the invention, it is possible to repeatedly accomplish oxidative heat generation and reductive regeneration of the heat generating material. Also, the heat can be recovered and stored if the heat, particularly the waste heat, is supplied while supplying the reducing gas.

### Brief Description of Drawings

Fig. 1 shows a block diagram showing the heat generating stage of a heat generating system of the invention.
Fig. 2 shows a block diagram showing the regeneration stage of a heat generating system of the invention.
Fig. 3 shows a block diagram showing the regeneration stage of another heat generating system of the invention.
Fig. 4 shows a metal honeycomb which can be used as a heat generating part according to the invention.
Fig. 5 is a enlarged cross-sectional view of the cells of a metal honeycomb which can be used as a heat generating part according to the invention.
Fig. 6 is a enlarged cross-sectional view of the cells of another metal honeycomb which can be used as a heat generating part according to the invention.
Fig. 7 is a block diagram showing a heat supply process in the regeneration stage according to two modes of the heat generating system of the invention.

### Best Mode for Carrying Out the Invention

The present invention will now be explained, in detail, based on the embodiment shown in the accompanying drawings, with the understanding that the drawings are only roughly illustrative of the heat generating system of the invention and do not in any way restrict the invention.

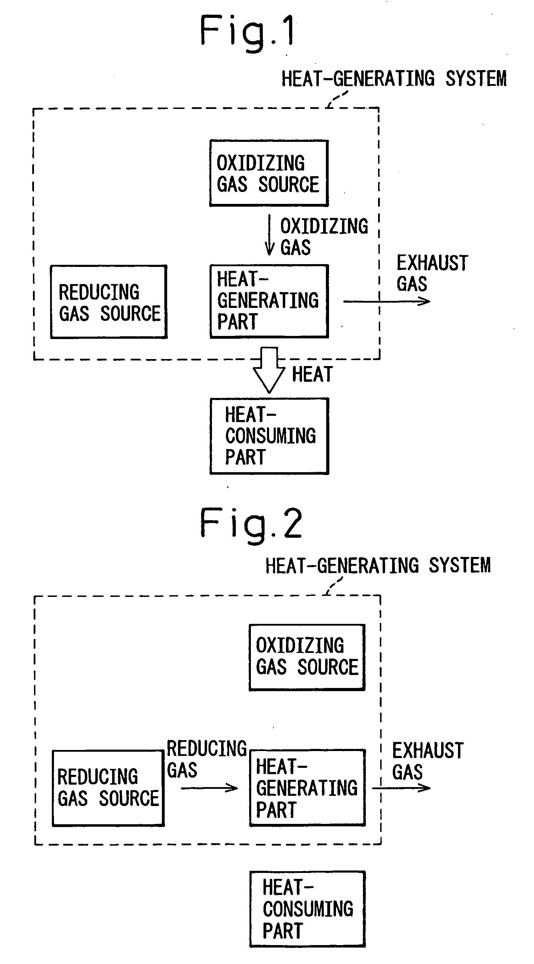

An embodiment of the invention will first be explained with reference to Figs. 1 and 2. Figs. 1 and 2 are block diagrams respectively showing the heat generating stage and the regeneration stage of the heat generating system of the invention.

In the heat generating stage, as shown in Fig. 1, the oxidizing gas source supplies oxidizing gas to the heat generating part comprising the heat generating material, and the heat generated by oxidation is supplied to an external heat consumption part.

In the regeneration stage, as shown in Fig. 2, the reducing gas source supplies reducing gas to the heat generating part comprising the heat generating material, and the oxidized heat generating material is reductively regenerated.

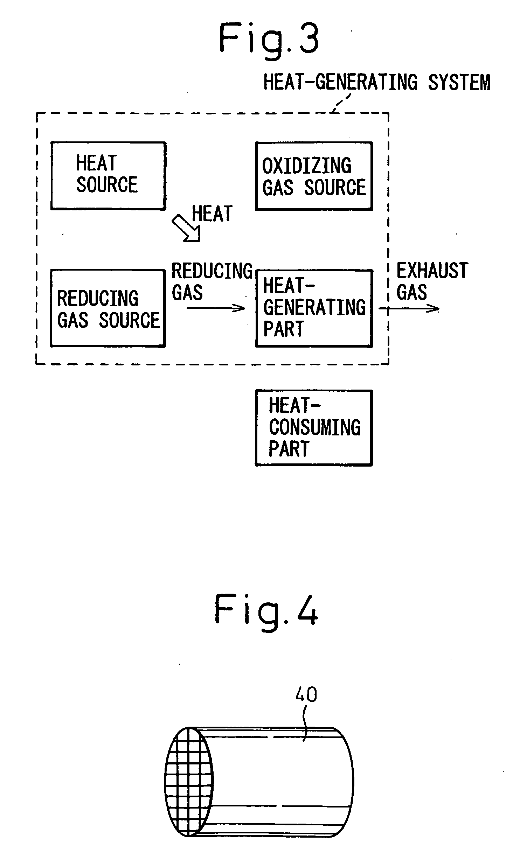

In the regeneration stage, as shown in Fig. 3, heat may be supplied from the heat source to the heat generating part to accelerate the reduction reaction. Although a separate part may be used as the heat source, the heat consumption part may also function as the heat source in the regeneration stage.

The heat generating system of the invention may be used for any purpose requiring repeated heating. For example, it may be used as the warmer for a combustion unit, catalyst device, coolant and/or air intake during start-up of an internal combustion engine such as an automobile engine; the warmer for a fuel cell system; a room heater; or a window glass anti-fogging/anti-misting system. In other words, any of these may be the heat consumption parts in Figs. 1 to 3.

Each of the parts of the heat generating system illustrated in the drawings will now be explained in greater detail.

The heat generating part comprising the heat generating material may have any desired construction, and, for example, it may be a reactor containing a heat generating material and, especially, a powdered or particulate heat generating material. The heat generating part may have a honeycomb structure such as a ceramic honeycomb or metal honeycomb with the heat generating material supported on the honeycomb cell channel surfaces, in order to increase the contact area between the heat generating material and the oxidizing and reducing gases. More specifically, the heat generating part may be a metal honeycomb 40 as shown in Fig. 4. In this case, the heat generating material may be applied to all of the cells of the metal honeycomb, and the oxidizing and reducing gases alternately supplied for oxidation and reduction of the heat generating material.

The heat generating part and the heat consumption unit may be thermally connected in order to supply heat generated at the heat generating part to the heat consumption unit. This will allow, for example, supply of heat from the heat generating part to the heat consumption unit by thermal conduction, supply of heat from the heat generating part to the heat consumption unit via the warmed oxidizing gas, and supply of heat from the heat generating part to the heat consumption unit via a heating medium. When using a fluid heating medium, the heat generating part may have a shape which is commonly employed for heat exchangers. Specifically, the heat generating part may comprise a channel in which the heat generating material is situated and the oxidizing and reducing gases flow through, and a channel in which the heating medium flows. The heating medium used may also be the actual target of heating, such as coolant.

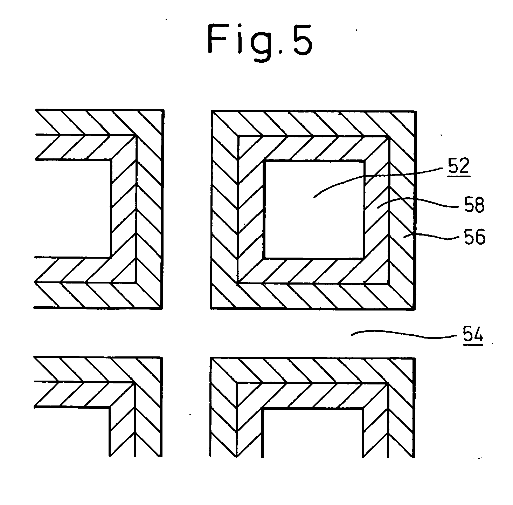

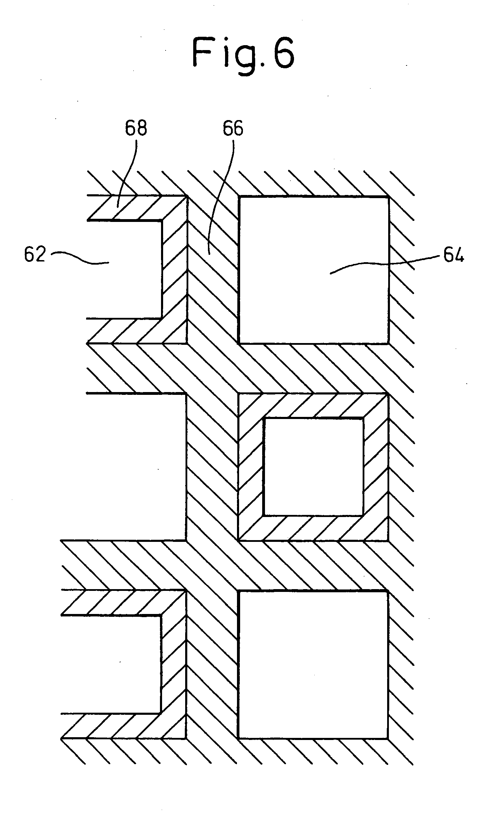

Specifically, as shown in Fig. 5, there may be used a metal honeycomb having cell channels 52 defined by the cell walls 56 of the metal honeycomb, and channels 54 between the cell walls. In this case, the heat generating material 58 is situated in the cell channels 52, and the oxidizing gas and reducing gas are directed to flow therethrough for oxidative heat generation and reductive regeneration of the heat generating material, respectively. The heating medium is circulated through the channels 54 between the walls for removal of heat and optional supply of heat. Instead of the channels shown in Fig. 5, the heat generating material 68 may be alternately situated in cell channels defined by the cell walls 66 of the metal honeycomb, and the oxidizing gas and reducing gas are directed to flow through the channels 62 in which the heat generating material is situated, with the heating medium being circulated through the other channels 64, as shown in Fig. 6.

The heat generating material supported in the heat generating part may be any desired material which can be oxidized to generate heat by the oxidizing gas used in the heat generating system of the invention and which can be reductively regenerated by the reducing gas used in the heat generating system of the invention.
Particularly when heat is supplied from the heat source in the reductive regeneration step for the heat generating material, the heat generating material may be selected as a material which can be reductively regenerated by the reducing gas at the temperature of the heat. For example, the heat generating material selected may be one that can be essentially reduced by a reducing gas composed of 50 vol% H₂, and the remainder nitrogen, at a temperature of 120°C.

As specific heat generating materials there may be selected metals, particularly transition metals, and more particularly iron group meals (iron, cobalt, nickel) or copper and compounds thereof, with iron and its compounds being most preferred. Using iron or a compound thereof as the heat generating material is preferred from the standpoint of cost and heating power.

The heat generating material may have any desired form, but it is preferably a powder or particles in order to improve contact between the heat generating material and the oxidizing and reducing gases. A powder or particulate heat generating material may be obtained by admixture with a powder of an inert material such as alumina to prevent sintering by the repeated oxidation and reduction. When a metal is used as the heat generating material for oxidation and reduction, a salt such as sodium chloride may also be combined therewith to accelerate the oxidation-reduction reaction.

A simple mortar or the like may be used for mixing the heat generating material with the other inert material. Particularly when the heat generating material is a metal compound, a metal compound solution obtained by dissolving the metal compound in a liquid such as water is preferably impregnated into a porous inert material, and the obtained inactive material is then dried to maintain a high degree of dispersion of the heat generating material.

The oxidizing gas source may be any unit which supplies an oxidizing gas, and for example, it may be a tank containing the oxidizing gas, or a pump and tube for supply of the oxidizing gas from the outside to the heat generating part. The oxidizing gas is a gas which oxidizes the heat generating material of the heat generating part to generate heat, and for example, it may be oxygen, air or the like. When the oxidizing gas is air, it may be drawn from the outside of the system and supplied to the heat generating part.

The reducing gas source may be any unit which supplies a reducing gas, and for example, it may be a tank containing the reducing gas or an apparatus which generates a reducing gas. The reducing gas is a gas capable of reducing the heat generating material of the heat generating part, and for example, it may be a hydrocarbon, hydrogen or the like. When the heat generating system of the invention is used as a warming apparatus for an internal combustion engine, gas containing the fuel for the internal combustion engine may be used as the reducing gas. Particularly the fuel may be converted to a lighter form to obtain a highly reductive gas such as hydrogen and used as the reducing gas. Hydrogen may also be obtained by electrolysis of water. Since hydrogen is highly reductive, it is preferred for use as the reducing gas.

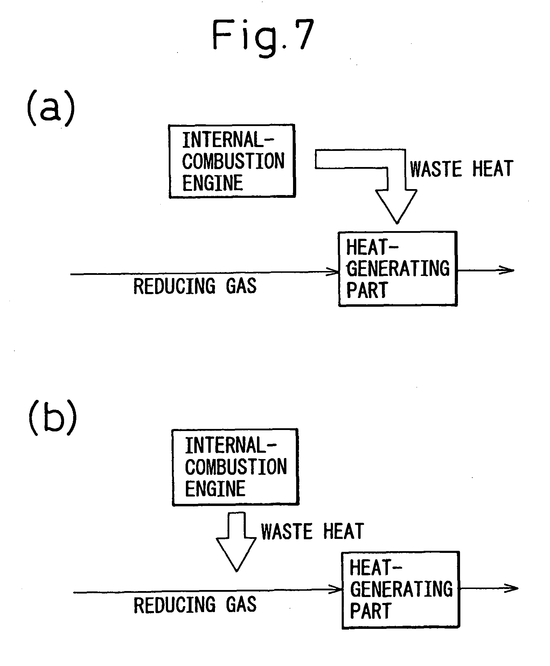

As an optional heat source, there may be used any desired apparatus which can supply heat to accelerate reduction of the heat generating material. For example, it may be an apparatus which supplies heat of above 100°C, especially 100 to 500°C and most preferably 100 to 300°C. When the heat generating system of the invention is used as a warming apparatus for an internal combustion engine, the internal combustion engine itself may be used as the heat source. In such cases, the supply of heat, particularly waste heat, from the internal combustion engine to the heat generating part may be accomplished by any desired means, and a heating medium such as described above may also be used. Also, as shown in Fig. 7(a) for example, the internal combustion engine and the heat generating part may be in thermal contact, or as shown in Fig. 7(b), heat may be supplied to the heat generating part via the reducing gas supplied to the heat generating part.

The present invention will now be explained by examples with the understanding that the invention is not limited to the examples.

### EXAMPLES

### Example 1

After pulverizing 46 g of FeCl₃·6H₂O with a mortar, 20 g of alumina powder and 0.5 g of NaCl were added thereto to obtain a mixture. The mixture was thoroughly dispersed, water was added, and, after further stirring, the mixture was dried for 1 hour at 120°C to obtain a powder. The powder was molded into pellets, having a diameter of 1 to 2 mm, to become the pellets of Example 1.

A quartz tube was placed in a laboratory tube furnace, and 3 g of the pellets of Example 1 were placed in the quartz tube. A reducing gas consisting of 50% hydrogen with the remainder nitrogen (1 L/min) was supplied while maintaining a temperature of 120°C in the interior of the quartz tube, to reduce the heat generating material. Next, air with a 10% moisture content (1 L/min) was supplied at room temperature for oxidative heat generation of the heat generating material, and the bed temperature of the pellets was measured. The reduction treatment and oxidative heat generation were repeated, and the bed temperature of the pellets was measured again. The results are shown in Table 1. The room temperature was approximately 25°C. Example 2

A mixed powder was obtained by thoroughly mixing 46 g of iron powder, 20 g of alumina powder and 0.5 g of NaCl with a mortar. The powder was molded into pellets, having a diameter of 1 to 2 mm, to become the pellets of Example 2. These pellets were tested in the same manner as Example 1. The results are shown in Table 1. Comparative Example 1

CaO powder was molded into pellets, having a diameter of 1-2 mm, to become the pellets of Comparative Example 1 these pellets were tested in the same manner as Example 1. The results are shown in Table 1.

### Comparative Examples 2-4

In Comparative Examples 2-4, the same procedure was repeated as in Examples 1 and 2 and Comparative Example 1, except that, in the regeneration treatment of the heat generating material, nitrogen gas (1 L/min) at 120°C was used instead of the reducing gas consisting of 50% hydrogen and the remainder nitrogen (1 L/min). The results are shown in Table 1.

**Table 1**

| | Maximum pellet bed temperature (°C) | | |
|---|---|---|---|
| | | | |
| Example 1 | 85 | 84 | 84 |
| Example 2 | 54 | 37 | - |
| Comp.Ex. 1 | 63 | 28 | 28 |
| Comp.Ex. 2 | 26 | - | - |
| Comp.Ex. 3 | 27 | - | - |
| Comp.Ex. 4 | 26 | - | - |

The results for Examples 1 and 2 in Table 1 demonstrate that regeneration of the heat generating material was achieved by supplying a reducing gas and heat (120°C). The first heat generation in Comparative Example 1 (CaO) was believed to be due to reaction between the air moisture and calcium oxide.

Also, comparison between the results of Examples 1 and 2 and the results of Comparative Examples 2 and 3 confirms that regeneration of the heat generating material was due to the reduction. As is clear from Comparative Examples 1 and 4, a system utilizing reaction between calcium oxide and water, which is commonly employed in the prior art, is not sufficiently regenerated at this regeneration temperature and with this regeneration gas. This is because regeneration from calcium hydroxide to calcium oxide generally requires a high temperature of about 500°C.

## Claims

1. A heat generating system comprising a heat generating part comprising a heat generating material which generates heat when oxidized,
wherein said heat generating system further comprises an oxidizing gas source which supplies an oxidizing gas to said heat generating part, and a reducing gas source which supplies a reducing gas to said heat generating part;
wherein the oxidizing gas supplied from said oxidizing gas source causes said heat generating material to be oxidized and generate heat, and the reducing gas supplied from said reducing gas source reductively regenerates said heat generating material which has been oxidized; and
wherein said heat generating system further comprises a heat source which supplies heat to said heat generating part, and said heat source supplies heat to said heat generating part while said reducing gas source supplies a reducing gas to said heat generating part,
wherein said heat generating material is combined with powder or particles of another inert material, and
wherein said heat generating material is iron chloride, said inactive material is alumina, and the iron chloride and alumina are combined with sodium chloride.

2. The heat generating system according to claim 1, wherein said heat source is an internal combustion engine.

3. The heat generating system according claim 1 or 2, wherein said heat generating material is in the form of powder or particles of metal or metal compound.

4. The heat generating system according to any one of claims 1 to 3, wherein
said heat generating system further comprises a heating medium for heat exchange with the outside of the system,
said heat generating part comprises first and second channels which allow mutual heat exchange,
said heat generating material is situated in said first channel where said oxidizing gas and said reducing gas flow through, and
said heating medium flows through said second channel.

5. A heat generating method,
wherein said method comprises supplying an oxidizing gas to a heat generating material which generates heat when oxidized to generate oxidation heat, and supplying a reducing gas to said heat generating material to reductively regenerate said heat generating material which has been oxidized; and
wherein said method further comprises supplying heat to said heat generating material concomitantly with supplying a reducing gas to said heat generating material,
wherein said heat generating material is combined with powder or particles of another inert material, and
wherein said heat generating material is iron chloride, said inactive material is alumina, and the iron chloride and alumina are combined with sodium chloride.

## Patentansprüche

1. Wärmeerzeugendes System, umfassend einen wärmeerzeugenden Anteil, umfassend ein wärmeerzeugendes Material, welches Wärme erzeugt wenn es oxidiert wird,
wobei das wärmeerzeugende System ferner eine Quelle für ein Oxidationsgas umfasst, die dem wärmeerzeugenden Anteil ein Oxidationsgas zuführt und eine Quelle für ein Reduktionsgas, die dem wärmeerzeugenden Anteil ein Reduktionsgas zuführt;
wobei das durch die Quelle für das Oxidationsgas zugeführte Oxidationsgas bewirkt, dass das wärmeerzeugende Material oxidiert wird und Wärme erzeugt und das durch die Quelle für das Reduktionsgas zugeführte Reduktionsgas das wärmeerzeugende Material, welches oxidiert wurde, reduktiv regeneriert; und
wobei das wärmeerzeugende System ferner eine Wärmequelle umfasst, welche dem wärmeerzeugenden Anteil Wärme zuführt, und die Wärmequelle dem wärmeerzeugenden Anteil Wärme zuführt, während die Quelle für das Reduktionsgas dem wärmeerzeugenden Anteil Reduktionsgas zuführt,
wobei das wärmeerzeugende Material mit einem Pulver oder Partikeln eines anderen inerten Materials kombiniert wird, und
wobei das wärmeerzeugende Material Eisenchlorid ist, das inaktive Material Aluminiumoxid ist und das Eisenchlorid und das Aluminiumoxid mit Natriumchlorid kombiniert werden.

2. Wärmeerzeugendes System nach Anspruch 1, wobei die Wärmequelle ein Verbrennungsmotor ist.

3. Wärmeerzeugendes System nach Anspruch 1 oder 2, wobei das wärmeerzeugende Material in Form eines Pulvers oder Partikeln eines Metalls oder einer Metallverbindung vorliegt.

4. Wärmeerzeugendes System nach einem der Ansprüche 1 bis 3, wobei das wärmeerzeugende System ferner ein Wärmemedium zum Wärmeaustausch mit der Außenseite des Systems umfasst,
wobei der wärmeerzeugende Anteil erste und zweite Kanäle umfasst, die einen gegenseitigen Wärmeaustausch erlauben,
wobei sich das wärmeerzeugende Material in dem ersten Kanal befindet, durch den das Oxidations- und das Reduktionsgas strömen, und
wobei das Wärmemedium durch den zweiten Kanal strömt.

5. Verfahren zur Wärmeerzeugung,
wobei das Verfahren das Zuführen eines Oxidationsgases zu einem wärmeerzeugenden Material umfasst, welches Wärme erzeugt wenn es oxidiert wird, um Oxidationswärme zu erzeugen, und das Zuführen eines Reduktionsgases zu dem wärmeerzeugenden Material, um das wärmeerzeugende Material, das oxidiert wurde, reduktiv zu regenerieren; und
wobei das Verfahren ferner das Zuführen von Wärme zu dem wärmeerzeugenden Material umfasst, begleitend vom Zuführen eines Reduktionsgases zu dem wärmeerzeugenden Material,
wobei das wärmeerzeugende Material mit einem Pulver oder Partikeln eines anderen inerten Materials kombiniert wird, und
wobei das wärmeerzeugende Material Eisenchlorid ist, das inaktive Material Aluminiumoxid ist und das Eisenchlorid und das Aluminiumoxid mit Natriumchlorid kombiniert werden.

## Revendications

1. Système de génération de chaleur comprenant une partie de génération de chaleur comprenant un matériau de génération de chaleur qui génère de la chaleur lorsqu'il est oxydé,
dans lequel ledit système de génération de chaleur comprend en plus une source de gaz oxydant qui alimente un gaz oxydant à ladite partie de génération de chaleur, et une source de gaz réducteur qui alimente un gaz réducteur à ladite partie de génération de chaleur,
dans lequel le gaz oxydant alimenté à partir de ladite source de gaz oxydant amène ledit matériau de génération de chaleur à être oxydé et générer de la chaleur, et le gaz réducteur alimenté à partir de ladite source de gaz réducteur régénère au moyen d'une réduction ledit matériau de génération de chaleur qui a été oxydé, et
dans lequel ledit système de génération de chaleur comprend en plus une source de chaleur qui alimente de la chaleur à ladite partie de génération de chaleur, et ladite source de chaleur alimente de la chaleur à ladite partie de génération de chaleur pendant que ladite source de gaz réducteur alimente un gaz réducteur à ladite partie de génération de chaleur,
dans lequel ledit matériau de génération de chaleur est combiné avec une poudre ou des particules d'un autre matériau inerte, et
dans lequel ledit matériau de génération de chaleur est du chlorure de fer, ledit matériau inactif est de l'alumine, et le chlorure de fer et l'alumine sont combinés avec du chlorure de sodium.

2. Système de génération de chaleur selon la revendication 1, dans lequel ladite source de chaleur est un moteur à combustion interne.

3. Système de génération de chaleur selon la revendication 1 ou 2, dans lequel ledit matériau de génération de chaleur est sous la forme de poudre ou de particules de métal ou d'un composé de métal.

4. Système de génération de chaleur selon l'une quelconque des revendications 1 à 3, dans lequel
ledit système de génération de chaleur comprend en plus un milieu chauffant pour un échange de chaleur avec l'extérieur du système,
ladite partie de génération de chaleur comprend des premier et second canaux qui permettent un échange de chaleur mutuel,
ledit matériau de génération de chaleur est situé dans ledit premier canal à travers lequel ledit gaz oxydant et ledit gaz réducteur s'écoulent, et
ledit milieu chauffant s'écoule à travers ledit second canal.

5. Procédé de génération de chaleur,
dans lequel ledit procédé comprend d'alimenter un gaz oxydant à un matériau de génération de chaleur qui génère de la chaleur lorsqu'il est oxydé afin de générer de la chaleur d'oxydation, et d'alimenter un gaz réducteur audit matériau de génération de chaleur afin de régénérer au moyen d'une réduction ledit matériau de génération de chaleur qui a été oxydé, et
dans lequel ledit procédé comprend en plus d'alimenter de la chaleur audit matériau de génération de chaleur de façon concomitante avec l'alimentation d'un gaz réducteur audit matériau de génération de chaleur,
dans lequel ledit matériau de génération de chaleur est combiné avec une poudre ou des particules d'un autre matériau inerte, et
dans lequel ledit matériau de génération de chaleur est du chlorure de fer, ledit matériau inactif est de l'alumine, et le chlorure de fer et l'alumine sont combinés avec du chlorure de sodium.
